# EUROPÄISCHE PATENTSCHRIFT

(11) **EP 0 514 736 B1**
(45) Veröffentlichungstag und Bekanntmachung des Hinweises auf die Patenterteilung: **30.07.1997**
(21) Anmeldenummer: 92107926.5
(22) Anmeldetag: 12.05.1992
(51) Int. Cl.: G08G 5/06, B64F 1/00, G09F 9/00

(54) **Hinweisschild auf Lande- oder Rollbahnen von Flugplätzen**
Advisory display board for airport taxi- and runways
Plaque indicatrice pour pistes d'atterrissage et de roulement d'un aéroport

(30) Priorität: 23.05.1991 DE 4116770
(43) Veröffentlichungstag der Anmeldung: 25.11.1992
(73) Patentinhaber: Daimler-Benz Aerospace Aktiengesellschaft, 81663 München (DE)
(72) Erfinder: Hengvoss, Helmut, Dipl.-Ing., W-2084 Halstenbek (DE)

(56) Entgegenhaltungen:
- EP-A- 0 317 630
- PROCEEDINGS OF THE 1990 AMERICAN CONTROL CONFERENCE Bd. 1, 23. Mai 1990, SAN DIEGO, CA., US Seiten 529 - 534; D.DIPPE: 'A Taxi And Ramp Management And Control system (TARMAC)'
- PATENT ABSTRACTS OF JAPAN vol. 14, no. 462 (P-1113)5. Oktober 1990 & JP-A-2 181 900

## Beschreibung

Die Erfindung betrifft ein Hinweisschild auf einer Lande- oder Rollbahn eines Flugplatzes zur Übermittlung von Informationen an einen Flugzeug- oder Fahrzeugführer, wobei die Anzeigefläche des Schildes eine wechselnde Symbolik zur Übermittlung von Informationen über den einem Flugzeug oder Fahrzeug vorgegebenen Lande- oder Rollweg aufweist, und wobei für die Anzeige der Symbole eine von einem Zentralrechner steuerbare Steuerungseinheit vorgesehen ist.

Mit den bisher allgemein bekannten Schildern werden einem Flugzeug- oder Fahrzeugführer feste vorgegebene Informationen übermittelt, die nicht nur ein Flugzeug oder Fahrzeug individuell betreffen. Derartige Informationen sind z. B. zur Führung eines Flugzeuges oder Fahrzeuges auf einem vorgegebenen Rollweg erforderlich und werden üblicherweise durch Befeuerungsanlagen und unter Zuhilfenahme des Sprechfunkverkehrs zwischen dem Bodenpersonal und dem Flugzeug- bzw. Fahrzeugführer bewerkstelligt. Hierbei ist die Betriebssicherheit bei Schlechtwetterbedingungen, bei fehlerhaften Befeuerungsanlagen oder aufgrund einer Überlastung des Sprechfunkverkehrs nicht ausreichend gegeben.

In PROCEEDINGS OF THE 1990 AMERICAN CONTROL CONFERENCE Bd. 1, 23.Mai 1990, SAN DIEGO, CA, US Seiten 529 - 534 ist ein Hinweissystem der eingangs genannten Art beschrieben, mit dem dem Fluglotsen im Tower und den Piloten von Flugzeugen präzise Angaben über die Position von Flugzeugen zur automatischen Führung der Flugzeuge bei schlechter Sicht gegeben werden.

Der Erfindung liegt daher die Aufgabe zugrunde, die Betriebssicherheit und Kapazitätsauslastung im Rollfeldbereich zu erhöhen und die Versorgung der Hinweisschilder mit elektrischer Energie sicherzustellen.

Die Aufgabe wird erfindungsgemäß durch die Verwendung eines Hinweisschildes gelöst, bei dem sowohl den natürlichen Wind als auch die Ausblasströmungen von Flugzeugen ausnutzende Windgeneratoren zur Erzeugung der elektrischen Energie für das Hinweisschild vorgesehen sind.

Ausgestaltungen der Erfindung sind in den Unteransprüchen 2 bis 4 beschrieben.

Die Hinweisschilder ermöglichen vorteilhafterweise eine Übermittlung der aktuellen Rollpfadinformationen an die Flugzeug- und Fahrzeugführer im Bereich der Start - Landebahn, den Rollwegen und des Vorfeldes auf Flughäfen. Als Information können Falte- und Freigabeinformationen (Ampelfunktion), Richtungsinformationen, Informationen über die Flugnummer bzw. Identifikationsbezeichnungen für den Adressat sowie Sonderinformationen in Form von Text bzw. Symbole übermittelt werden. Damit ist eine deutliche Entlastung des Sprechfunkverkehrs zur Führung des Rollverkehrs gegeben. Weiterhin können die Schilder bei Ausfall von Teilbereichen der Rollbahnbefeuerung (z. B. Stopbar) als Zweitinformationesquelle dienen. Von Vorteil ist auch, daß zur einfachen Installation die Energieversorgung aus den Befeuerungssystemen, über Solar- bzw. Windgeneratoren erfolgen kann. Die Datenübertragung zu den Wechselschildern kann über sepazate Kupfer- oder LWL-Verbindungen, einem Datenbus, über Funk oder über vorhandene Kabel der Befeuerung oder anderer Systeme stattfinden.

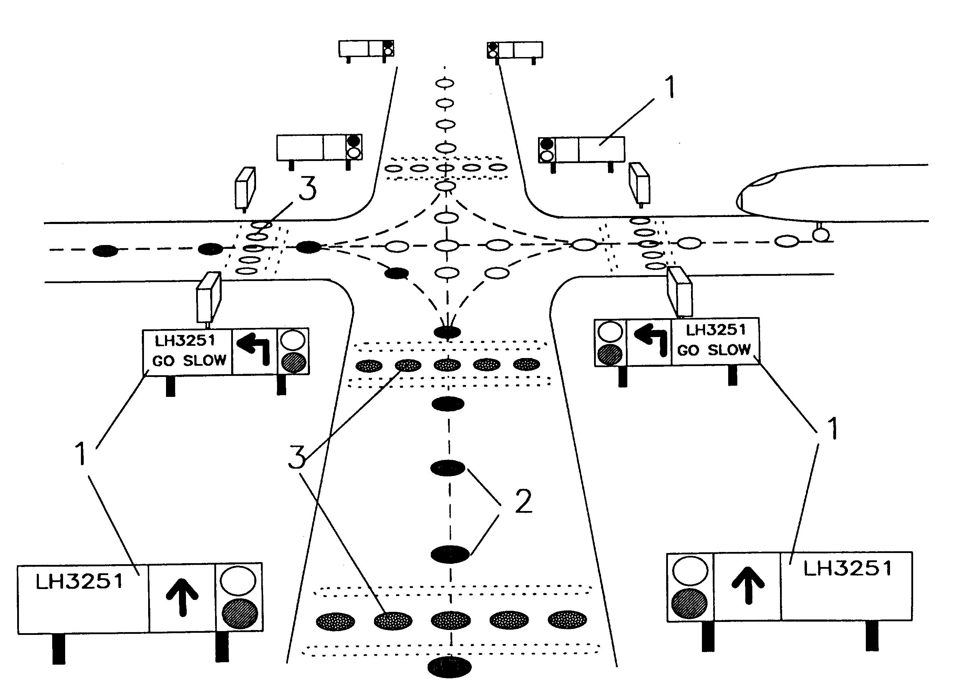

In der Zeichnung ist ein Ausführungsbeispiel nach der Erfindung dargestellt und zwar ist eine Rollführung mit Hilfe einer Mittellinienbefeuerung und mehreren Hinweisschildern 1 dargestellt. Die Hinweisschilder, die optische oder mechanische Anzeigeelemente zur Darstellung der Informationen aufweisen können, sind sowohl als gesonderte Hilfsmittel als auch in Zusammenhang mit Befeuerungssystemen 2 und Stopsignalmarkierungen 3 in Form von redundanten Hilfsmitteln verwendbar.

Mittels der Hinweisschilder 1 können einem Flugzeugführer oder dem Führer eines ein Flugzeug schleppenden Fahrzeuges Richtungs-, Halte- und/oder Freigabeinformationen auf sichtbare Weise übermittelt werden. Auch ist die Übermittlung von flugzeug- oder fahrzeugspezifischen Identifikationensinformationen sowie von Sonderinformationen möglich.

Die Versorgung der Hinweisschilder 1 mit elektrischer Energie kann von einem vorhandenen Befeuerungssystem unabhängig von seiner Betriebsstufe, von Solargeneratoren, von Windgeneratoren, die den natürlichen Wind oder die Ausblasströmungen von Flugzeugen ausnutzen, und/oder mittels Energiespeicher erfolgen.

Die Hinweisschilder können vorzugsweise eigenständige Ablaufsteuerungen aufweisen, die beispielsweise an interne oder externe Sensoren angeschlossen sein können. Diese Sensoren erfassen Positions- und/oder Identifikationsangaben eines Flugzeuges oder Fahrzeuges, die in den Steuerungseinheiten der Hinweisschilder 1 selbständig verarbeitet werden und gegebenfalls an einen zentralen Rechner übermittelt werden können.

Diese Informationsübertragung kann mittels vorhandener Kabel eines Befeuerungssystems 2 oder mit Hilfe eines eigenständigen Datenübertragungssystems, vorzugsweise eines Funk-Datenübertragungssystems erfolgen. Auch ist vorgesehen, daß mehrere Hinweisschilder 1 zu einem System zusammenschaltet sind, das die Informationen für die einzelnen Hinweisschilder 1 von einer Zentralrechnereinheit erhält.

## Patentansprüche

1. Hinweisschild auf einer Lande- oder Rollbahn eines Flugplatzes zur Übermittlung von Informationen an einen Flugzeug- oder Fahrzeugführer, wobei die Anzeigefläche des Schildes (1) eine wechselnde Symbolik zur Übermittlung von Informationen über den einem Flugzeug oder Fahrzeug vorgegebenen Lande- oder Rollweg aufweist, und wobei für die Anzeige der Symbole eine von einem Zentralrechner (10) steuerbare Steuerungseinheit (18) vorgesehen ist, dadurch gekennzeichnet, daß sowohl den natürlichen Wind als auch Ausblasströmungen von Flugzeugen ausnutzende Windgeneratoren (16) zur Erzeugung der elektrischen Energie für das Hinweisschild (1) vorgesehen sind.

2. Hinweisschild nach Anspruch 1, dadurch gekennzeichnet, daß dem Flugzeug- oder Fahrzeugführer mit dem Hinweisschild (1) Richtungs-, Halte- und/oder Freigabeinformationen übermittelt werden.

3. Hinweisschild nach Anspruch 1 oder 2, dadurch gekennzeichnet, daß das Hinweisschild (1) mittels Energiespeicher (9) mit elektrischer Energie versorgt wird.

4. Hinweisschild nach einem der Ansprüche 1 bis 3, dadurch gekennzeichnet, daß mehrere Hinweisschilder (1) zu einem System zusammenschaltet sind, das die Informationen für die einzelnen Hinweisschilder (1) von einer Zentralrechnereinheit (10) erhält.

## Claims

1. Advisory board on a runway or taxiway of an airport for the communication of items of information to an aircraft pilot or a vehicle driver, wherein the display face of the board (1) has a changing symbolism for the communication of items of information about the runway or taxiway predetermined for an aircraft or a vehicle, and wherein a control unit (18) controllable by a central computer (10) is provided for the display of the symbols, characterised thereby that wind generators (16) utilising not only naturally occurring wind but also efflux currents of aircraft are provided for the generation of the electrical energy for the advisory board (1).

2. Advisory board according to claim 1, characterised thereby that directional, holding and/or clearance items of information are communicated to the aircraft pilot or vehicle driver by way of the advisory board.

3. Advisory board according to claim 1 or 2, characterised thereby that the advisory board (1) is supplied with electrical energy (9) by means of energy store (9).

4. Advisory board according to one of claims 1 to 3, characterised thereby that several advisory boards (1) are connected together into a system, which obtains the items of information for the individual advisory boards (1) from a central computer unit (10).

## Revendications

1. Plaque signalétique pour piste d'atterrissage ou de roulement sur un aéroport pour la transmission d'informations à un pilote d'avion ou à un conducteur de véhicule, la surface d'affichage de la plaque (1) présentant une symbolique évolutive pour la transmission d'informations concernant la voie d'atterrissage ou de roulement attribuée à un avion ou à un véhicule, pour l'affichage des symboles, une unité de commande (18), gérée par un ordinateur central (10) étant prévue, caractérisée en ce qu'il est prévu des générateurs de vent (16), exploitant aussi bien le vent naturel que les courants de soufflage des avions en vue de produire l'énergie électrique nécessaire à la plaque signalétique (1).

2. Plaque signalétique selon la revendication 1, caractérisée en ce que la plaque (1) transmet au pilote de l'avion ou au conducteur du véhicule des informations concernant la direction, l'arrêt et/ou l'accès libre.

3. Plaque signalétique selon la revendication 1 ou 2, caractérisée en ce que la plaque (1) est alimentée en énergie électrique par des accumulateurs d'énergie (9).

4. Plaque signalétique selon l'une des revendications 1 à 3, caractérisée en ce que plusieurs plaques signalétiques (1) sont montées en un système qui reçoit les informations destinées aux différentes plaques signalétiques (1) depuis une unité informatique centrale (10).
